# EUROPÄISCHE PATENTANMELDUNG

(11) **EP 1 469 184 A1**
(43) Veröffentlichungstag der Anmeldung: **20.10.2004**
(21) Anmeldenummer: 04017474.0
(22) Anmeldetag: 10.10.2000
(51) Int. Cl.: F02K 3/077, F02K 3/02, F02K 1/34, F02K 1/48

(54) **Turbostrahltriebwerk**

(30) Priorität: 23.12.1999 DE 19962617
(62) Teilanmeldung aus: 00972707.4
(71) Anmelder: Meyer, Mathias, 4907 Bascharage (LU)
(72) Erfinder: Meyer, Mathias, 4907 Bascharage (LU)
(74) Vertreter: Diehl, Hermann, Dr. Dipl.-Phys.

(57) **Zusammenfassung**

Die Erfindung stellt ein Strahltriebwerk mit einer Turbine und einer hinter der Turbine angeordneten Düse bereit, wobei das Triebwerk (1) eine Triebwerksaustrittsebene (16) aufweist und als Doppelrohrtriebwerk mit einem inneren Strömungskanal (14) und einem äußeren Strömungskanal (12) ausgeführt ist, wobei der innere Strömungskanal (14) von dem äußeren Strömungskanal (12) ummantelt ist und in dem äußeren Strömungskanal (12) eine Hauptströmung (11) geführt wird, während in dem inneren Strömungskanal (14) eine Zusatzströmung (13) geführt wird, und wobei die Düse (5) oder ein Ausströmring (20) in der Triebwerksaustrittsebene (16) onduliert ist.

## Beschreibung

### Technisches Gebiet

Die Erfindung betrifft ein Strahltriebwerk mit im Vergleich zu herkömmlichen Triebwerken verminderter Schallemission.

### Stand der Technik

Strahltriebwerke werden seit nunmehr mehr als sechzig Jahren entwickelt und dienen vornehmlich zur Vortriebserzeugung leistungsstarker ziviler als auch militärischer Flugzeuge. In diesen mehr als sechzig Jahren erfuhr die Technologie der Triebwerke eine rasante Entwicklung insbesondere hin zu höherer Leistungsdichte bei gleichzeitig verringertem Primärenegieverbrauch. Aber auch das Schadstoffemissionsverhalten und Schallemissionsverhalten moderner Triebwerke wurde im Vergleich zu früheren Generationen deutlich reduziert. Insbesondere die Reduktion des Schallemissionsverhaltens gewinnt jedoch auch weiterhin aufgrund des zunehmendem Flugaufkommens und restriktiver Landeund Startbestimmungen der Flughäfen zunehmend an Bedeutung.

In FR-A-2 605 679 ist ein Mehrstromtriebwerk offenbart, bei dem neben einer Hauptströmung noch eine innere Strömung in einem inneren Strömungskanal und eine äußere Strömung in einem äußeren Strömungskanal geführt wird. Alle drei Strömungen dienen hier der Leistungssteigerung des Triebwerks, wobei die innere Strömung zusätzlich zur Kühlung des Triebwerks dient.

Auch in GB 919 113 A ist ein Triebwerk beschrieben, das eine Hauptströmung und eine innere Strömung aufweist, wobei die innere Strömung mittels einer Hohlwelle geführt wird. Die innere Strömung dient hier jedoch lediglich der Kühlung des Triebwerks.

Ein wesentliches, bisher verfolgtes Konzept zur Reduktion des Schallemissionsverhalten von Turbostrahltriebwerken bestand darin, den aus der Turbine austretenden, heißen Abgasstrahl mittels eines weiteren, kühleren Abgasstrahls zu ummanteln. Der kühlere Abgasstrahl wird hierzu in der Regel der Triebwerksdurchströmung hinter der ersten Verdichterstufe, dem sogenannten Fan, entnommen, und mittels eines Bypass der Triebwerksaustrittsebene zugeführt. Akustische Schwingungen, die in der Brennkammer und der Turbine generiert werden und mit dem heißen Abgasstrahl aus dem Triebwerk austreten, müssen sich somit zunächst durch das ummantelnde kühlere Fluid fortpflanzen, bevor sie in der Umgebung als Lärm vernehmbar werden. Bei dem Durchgang der Schallwellen durch die den Heißgasstrahl ummantelnde Strömung werden die akustischen Schwingungen jedoch erheblich gedämpft, so daß letztlich eine deutliche Intensitätsverminderung an in die Umgebung abgestrahltem Schall zu verzeichnen ist. Auch eine verbesserte aerodynamische Schaufelauslegung mit reduzierten Spitzenspalten und ein verbesserter mechanischer Aufbau mit verminderten Bauteilschwingungen der Treibwerke trägt zu einer Verminderung der Schallemissionen bei.
Jedoch führt insbesondere die Nachexpansion des aus dem Triebwerk austretenden Fluides, die besonders dramatisch bei einer nicht angepaßten Düsenströmung auftritt, zu einer Erhöhung der Schallemissionen. Durch die durch die Nachexpansion hervorgerufene Aufweitung des Strahlkegels des Abgasstrahls kommt es zusätzlich zu einer Verminderung der Wirkung einer zur Schallemissionsverminderung herkömmlich eingesetzten Bypassströmung.

### Darstellung der Erfindung

Aufgabe der Erfindung ist es daher, ein Turbostrahltriebwerk mit verminderter Lärmemission bereitzustellen. Insbesondere soll der Aufweitung des Abgasstrahls am Austritt des Triebwerks entgegengewirkt werden.

Erfindungsgemäß ist hierzu ein Turbostrahltriebwerk als Doppelrohrtriebwerk mit einem inneren Strömungskanal und einem äußeren Strömungskanal ausgeführt, wobei der innere Strömungskanal von dem äußeren Strömungskanal ummantelt ist und im Betrieb des Triebwerks in dem äußeren Strömungskanal eine Triebwerkshauptströmung geführt wird, während in dem inneren Strömungskanal eine Zusatzströmung geführt wird. Unter dem Begriff Triebwerkshauptströmung ist hierbei die Strömung des Arbeitsfluides, üblicherweise Luft, durch den Verdichter, die Brennkammer und die Turbine des Triebwerks zu verstehen. Das Triebwerk kann hierbei als Einwellentriebwerk oder auch als Mehrwellentriebwerk ausgeführt sein.
Üblicherweise gelangt das Arbeitsfluid der Triebwerkshauptströmung nach dem Austritt aus der Turbine in eine Düse, in der das Arbeitsfluid zum Düsenaustritt hin nochmals beschleunigt wird. Der Massendurchsatz sowie die Austrittsgeschwindigkeit der Triebwerkshauptströmung aus der Düse wirken sich hierbei unmittelbar auf den Triebwerksschub und somit auf die Vortriebsleistung des Triebwerks aus. In der Regel wird angestrebt, daß der statische Druck der Triebwerkshauptströmung am Düsenaustritt gleich dem Umgebungsdruck ist. Hierdurch würde eine Nachexpansion weitestgehend vermieden, die neben einem unerwünschten Druckverlust der Strömung auch zu einer verstärkten Schallemission führt. Dieser Idealzustand gleicher statischer Drücke ist jedoch aufgrund von Realgaseffekten, wie beispielsweise Dissipation der Strömung als auch die Nacheinschnürung der Düsenströmung aufgrund der massenbedingten Trägheit der Fluidpartikel, nicht erreichbar. Insofern ist ein gewisses Maß an Nachexpansion beim Austritt der Triebwerkshauptströmung aus der Düse unvermeidbar. Die Nachexpansion kann bei herkömmlichen Triebwerken jedoch lediglich radial nach außen erfolgen, wodurch es zur Ausbildung eines sich aufweitenden Abgasstrahlkegels kommt. Durch die radial nach außen auftretende Nachexpansion kommt es auch zu einer vermehrten Abstrahlung von durch die Nachexpansion erzeugtem Schall.
Hier setzt die Erfindung an. Durch die erfindungsgemäße Ausführung des Triebwerks mit der in dem inneren Strömungskanal geführten Zusatzströmung kommt es zu einer Fluidschichtung am Austritt der Düse. Vorzugsweise mittig tritt das Fluid der Zusatzströmung am Triebwerksaustritt in den Abgasstrahl aus. In einem kreisringförmigen Zwischenbereich, der das Fluid der Zusatzströmung umgibt, strömt Fluid der Triebwerkshauptströmung. Das Fluid der Triebwerkshauptströmung weist hierbei in der Regel eine noch vergleichsweise hohe Temperatur auf. Außerhalb der Triebwerkshauptströmung liegt Umgebungsfluid vor.
Zur Initiierung der Zusatzströmung muß das Fluid der Zusatzströmung zumindest im Falle einer angepaßt arbeitenden Düse nicht oder nur geringfügig verdichtet werden. Der Druckpotentialunterschied zwischen Totaldruck am Eintritt in den inneren Strömungskanal einerseits und dem statischen Druck der Triebwerkshauptströmung am Düsenaustritt andererseits stellt in der Regel ein ausreichendes Druckgefälle zur Aufrechterhaltung der Zusatzströmung dar. Somit liegt im Bereich der Zusatzströmung üblicherweise Umgebungsdruck oder sogar ein unter dem Umgebungsdruck liegender Druck vor.
Das aus der Düse austretende Fluid der Triebwerkshauptströmung kann somit radial sowohl nach außen als aber auch nach innen hinein expandieren. Die Aufweitung des Abgasstrahlkegels wird infolgedessen im Vergleich zu einem Triebwerk ohne Zusatzströmung geringer ausfallen. Ein wesentlicher Vorteil der erfindungsgemäßen Ausführung des Triebwerks liegt jedoch darüber hinaus in der verminderten Lärm- und Schallemission. Die nach innen gerichtete Nachexpansion der Triebwerkshauptströmung und der hierdurch hervorgerufene Schall ist durch die kreisringförmig die Zusatzströmung umgebende Triebwerkshauptströmung akustisch gleichsam gekapselt. Beim Durchgang des im Inneren der Triebwerkshauptströmung erzeugten Schalls durch die Triebwerkshauptströmung wird die Intensität des Schalls erheblich gedämpft, so daß nur noch ein sehr geringer Bruchteil der ursprünglichen Schallintensität nach außen dringt. Insgesamt nimmt durch die erfindungsgemäße Ausführung eines Triebwerks die Schallemission im Vergleich zu einem herkömmlich ausgeführten Triebwerk somit erheblich ab.

Zweckmäßig wird der innere Strömungskanal durch eine beidseitig offene Hohlwelle gebildet. Hier ist es in der Regel sinnvoll, die in modernen Triebwerken oftmals als Hohlwelle ausgebildete Triebwerkswelle konstruktiv in geeigneter Weise so abzuändem, daß sie als innerer Strömungskanal genutzt werden kann. Dies bedeutet in vielen Fällen, daß der Durchmesser der Triebwerkswelle im Vergleich zu den bisherigen Triebwerken vergrößert werden muß, um hier einen zum Erreichen des angestrebten Effektes ausreichenden Massendurchsatz der Zusatzströmung erzielen zu können. Die somit triebwerkseintrittsseitig und triebwerksaustrittsseitig offen ausgeführte Hohlwelle ermöglicht in einfacher Weise, daß Fluid aus dem Bereich vor dem Triebwerk durch das Triebwerk hindurch mittig dem Abgasstrahl zugeführt wird. Aufgrund des Druckunterschieds zwischen statischem Druck des Abgasstrahls und dem Totaldruck der Anströmung des Triebwerks am Triebwerkseintritt und der hieraus resultierenden Saugwirkung bildet sich auch im Standfall in der als inneren Strömungskanal ausgebildeten Hohlwelle eine Zusatzströmung aus. Das Fluid der Zusatzströmung muß somit zur Erzeugung der Zusatzströmung nicht eigens gefördert, d.h. angesaugt und verdichtet, werden.

Bevorzugt endet der innere Strömungskanal in Strömungsrichtung vor der Triebwerksaustrittsebene, wobei der Abstand zwischen dem Ende des Strömungskanals und der Triebwerksaustrittsebene bevorzugt zwischen 10% und 25% des Durchmessers des Triebwerks in der Triebwerksaustrittsebene beträgt. Die aus dem inneren Strömungskanal ausströmende Zusatzströmung erfährt innerhalb der Düse, d.h. zwischen dem Austritt aus dem inneren Strömungskanal und dem Düsenaustritt, aufgrund der in der Düse stattfindenden Beschleunigung der Strömung somit noch eine Gleichrichtung und Glättung insbesondere im Übergangsbereich zur Triebwerkshauptströmung. Dies führt einerseits zu einer Verminderung der Strömungsverluste und somit zu einem höheren Wirkungsgrad des Triebwerks und andererseits zu einer geringeren Schallerzeugung bzw. einer höheren Schalldämpfung und Schallabsorption der Zusatzströmung.

Der Massenstrom der Zusatzströmung beträgt bevorzugt zwischen 5% und 20%, besonders bevorzugt zwischen 5% und 10%, des Massenstroms der Triebwerkshauptströmung. In diesem Massenstrombereich wird einerseits eine zufriedenstellende Dämpfung des Schalls erzielt, andererseits sind die für den Massendurchsatz der Zusatzströmung erforderlichen Strömungsquerschnitte des inneren Strömungskanals konstruktiv noch realisierbar ohne unverhältnismäßig große konstruktive Änderungen des Triebwerksaufbaus erforderlich zu machen.

Zum Zwecke der Verminderung der Schallemission eines Triebwerks sieht die Erfindung vor, die Düse zumindest in der Triebwerksaustrittsebene onduliert auszuführen. Unter Ondulation ist ein wellenartiger Verlauf des Düsenblechs längs der Umfangserstreckung der Düse oder eines anderweitigen düsenähnlichen Aufsatzes zu verstehen. Dieser wellenartige Verlauf des Düsenblechs ermöglicht der aus der Düse austretenden Strömung eine Expansion nicht nur in radialer Richtung sondern abschnittsweise auch in Umfangsrichtung. Der vorrangig in Umfangsrichtung emittierte Schall kompensiert sich zumindest teilweise gegenseitig, so daß insgesamt eine Reduktion der Schallemission des Triebwerks erzielt wird.

Neben den oben aufgeführten Merkmalen kann ein erfindungsgemäß ausgeführtes Triebwerk darüber hinaus auch mit herkömmlichen Merkmalen zur Verminderung der Schallemission ausgestattet sein. So ist es beispielsweise durchaus möglich und in Abhängigkeit des Anwendungsfall, beispielsweise insbesondere für in Zivilflugzeugen eingesetzte Triebwerke, sinnvoll, ein erfindungsgemäß ausgeführtes Triebwerk als Bypasstriebwerk mit einem Bypasskanal zu versehen.

In einer weiteren zweckmäßigen Ausgestaltung ist am Düsenaustritt des Triebwerks eine Vorrichtung, vorzugsweise eine oder mehrere Klappen, angebracht, mit Hilfe derer die Düsenaustrittsfläche zumindest teilweise verschlossen werden kann. Solche Klappen sind in ähnlicher oder auch gleicher Weise bereits im Stand der Technik als Schubumkehrer bekannt. Im Falle der erfindungsgemäßen Ausführung des Triebwerks würde der Abgasstrahl zur Schubumkehr aber nicht nur am Triebwerk vorbei nach vorne umgelenkt, sondern das aus dem Triebwerk austretende Fluid würde auch durch den inneren Strömungskanal nach vorne austreten und hier zu einer Umkehrung des Schubes beitragen.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: einen Schnitt durch ein erfindungsgemäß ausgeführtes und schematisch dargestelltes Triebwerk;
- Figur 2: eine Hinteransicht eines erfindungsgemäß ausgeführten Triebwerks mit einer ondulierten Düse.

Es sind nur die für das Verständnis der Erfindung wesentlichen Elemente gezeigt. Gleichwirkende Elemente sind mit denselben Bezugszeichen versehen.

### Wege zur Ausführung der Erfindung

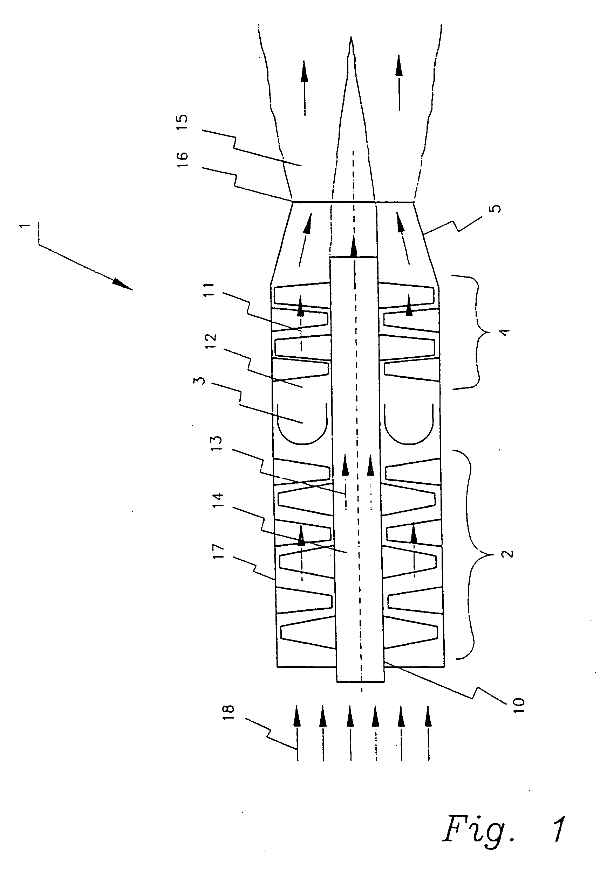

Figur 1 zeigt in einer Schnittdarstellung ein erfindungsgemäß ausgeführtes Triebwerk 1. Das hier als Einwellentriebwerk dargestellte Triebwerk 1 umfaßt einen mehrstufigen Verdichter 2, eine Ringbrennkammer 3 und eine mehrstufige Turbine 4. Der durch die Triebwerkswelle 10 und das Gehäuse 17 gebildete Strömungskanal bildet hier den äußeren Strömungskanal 12. Hinter der Turbine 4 ist des Weiteren eine Düse 5 angeordnet, die in Figur lediglich schematisch dargestellt ist. Um insbesondere die Schallerzeugung und -abstrahlung des Triebwerks zu vermindern, ist das in Figur 1 dargestellte Triebwerk 1 als Doppelrohrtriebwerk ausgeführt. Hierzu ist die hohl ausgeführte Triebwerkswelle 10 nach vorne und nach hinten offen und bildet hierbei einen inneren Strömungskanal 14. Dieser innere Strömungskanal 14 ist entsprechend der Darstellung vollständig von dem äußeren Strömungskanal 12 ummantelt. Im Triebwerksbetrieb tritt Luft aus dem Bereich vor dem Triebwerk in den inneren Strömungskanal 14 ein und strömt als Zusatzströmung 13 längs dieses inneren Strömungskanal 14 durch das Triebwerk 1. Am Austritt aus der Triebwerkswelle 10 entströmt die Luft in den Abgasstrahl 15. In der in Figur 1 dargestellten Anordnung und Ausführung des inneren Strömungskanals 14 entströmt die Zusatzströmung 13 noch im Bereich der Düse 5 in einem gewissen Abstand zur Düsenaustrittsebene aus der Hohlwelle 10 in die Hauptströmung 15. Durch die Beschleunigung der Strömung in der Düse werden Verwirbelungen und Querströmungen der Zusatzströmung 13, die beim Austritt in die Hauptströmung 11 auftreten, vermindert und Druckverluste somit reduziert. Druckunterschiede zwischen der Hauptströmung und der Zusatzströmung gleichen sich jedoch innerhalb dieses kurzen Strömungsabschnittes nicht oder nicht vollständig aus. Der wesentliche Vorteil der dem Abgasstrahl in der dargestellten Wiese zugeführten Zusatzströmung 13 liegt jedoch darin, daß die beim Austritt aus der Düse auftretende Nachexpansion der Hauptströmung 11 nicht nur radial nach außen erfolgt, sondern daß ein Teil der Nachexpansion der Hauptströmung auch zum Zentrum hin gerichtet erfolgt. Die Nachexpansion der Hauptströmung ist ursächlich für einen erheblichen Anteil der Schallemission eines Triebwerks. Hierbei kann sich der im Außenbereich der Hauptströmung erzeugte Schall nahezu ungehindert in die Umgebung ausbreiten. Schall, der jedoch im Zentrum der Hauptströmung erzeugt wird, muß zunächst die Haupströmung durchlaufen, um in die Umgebung zu gelangen. Hierbei tritt infolge des mehrmaligen Übergangs und auch infolge des hohen Turbulenzgrades der Hauptströmung eine starke Dämpfung des Schalls auf, so daß nach außen eine stark verminderte Schallemission zu beobachten ist.
In der Regel ist es nicht erforderlich, die Luft der Zusatzströmung zu verdichten bzw. zu fördern, um die Zusatzströmung zu initiieren. Ausreichend für die Ausbildung der Strömung längs des inneren Strömungskanals ist in der Regel bereits der sich ausbildende Druckunterschied zwischen Totaldruck der Anströmung 18 am Triebwerkseintritt und statischem Druck des Abgasstrahls am Triebwerksaustritt. Der Abgasstrahl saugt somit gleichsam einer Strahlpumpe Luft durch die Hohlwelle.
Als Nachteil der erfindungsgemäßen Ausführung der Erfindung wirkt sich die Vergrößerung des Durchmessers der Welle aus. Infolge der Vergrößerung des Wellendurchmesers kann es somit erforderlich sein, auch den Nabendurchmesser und somit letztlich den Innendurchmesser des äußeren Strömungskanals im Vergleich zu einer Ausführung des Triebwerks in herkömmlicher Weise zu vergrößern. Hieraus ergeben sich veränderte Umfangsgeschwindigkeiten der Beschaufelung und entsprechend veränderte Strömungsbedingungen im Verdichter und in der Turbine. Die Beschaufelung muß im Rahmen der Triebwerksauslegung den veränderten Strömungsbedingungen angepaßt ausgelegt werden. In der Regel bedeutet jedoch eine Vergrößerung des Durchmessers bei konstanter Drehzahl eine Vergrößerung der Umfangsgeschwindigkeit. Eine höhere Umfangsgeschwindigkeit führt wiederum zu einer höheren Umlenkung der Strömung in einer Stufe und somit zu einem höheren Energieumsatz bzw. einen gleichbleibenden Wirkungsgrad vorausgesetzt zu einem höheren Druckverhältnis in einer Verdichterstufe, bzw. zu einem höheren Enthalpiegefälle in einer Turbinenstufe. Im Falle einer geeigneten Auslegung der Beschaufelung eines Triebwerks kann die Vergrößerung des Nabendurchmessers somit dazu genutzt werden, einen höheren Energieumsatz des Triebwerks je Stufe zu realisieren. Dies führt letztlich zu einer Steigerung des erzielbaren Schubs.

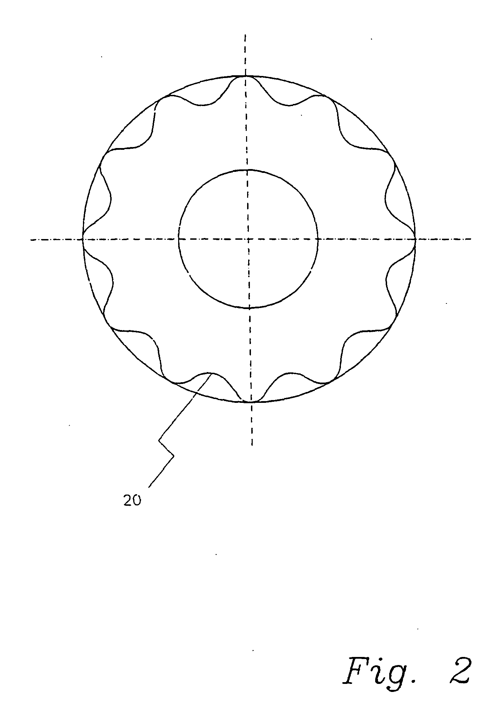

In Figur 2 ist ein ondulierter Ausströmring 20 gezeigt, der vorzugsweise in Kombination mit einem erfindungsgemäß ausgeführten Triebwerk zur Anwendung kommt. Statt eines als zusätzliche Bauteilkomponente ausgeführten Ringes kann auch zweckmäßig die Düse 5 im Austrittsbereich in ondulierter, d.h. gewellter, Form ausgeführt sein. Die Ondulation des Ausströmrings 20 oder der Düse 5 in der Austrittsebene 15 führt dazu, daß das aus dem Triebwerk ausströmende Fluid der Wellenform des Düsenaustrittsquerschnitts folgt. Das so ausströmende Fluid kann aufgrund der wellenförmigen Aussparungen neben einer Expansion in radialer Richtung auch in Umfangsrichtung in die durch die Ondulation ausgesparten Bereiche hinein expandieren. Die Expansion in Umfangsrichtung führt hierbei zusätzlich zu einer Verminderung der Schallproduktion und Schallemission.

### Bezugszeichenliste

- 1: Triebwerk
- 2: Verdichter
- 3: Brennkammer
- 4: Turbine
- 5: Düse

- 10: Hohlwelle
- 11: Hauptströmung
- 12: äußerer Strömungskanal
- 13: Zusatzströmung
- 14: innerer Strömungskanal
- 15: Abgasstrahl
- 16: Triebwerksaustrittsebene
- 17: Gehäuse
- 18: Anströmung

- 20: ondulierter Ausströmring

## Patentansprüche

1. Strahltriebwerk (1), umfassend eine Turbine (4) und eine in Strahlrichtung hinter der Turbine (4) angeordnete Düse (5),
wobei das Triebwerk (1) eine Triebwerksaustrittsebene (16) aufweist und als Doppelrohrtriebwerk mit einem inneren Strömungskanal (14) und einem äußeren Strömungskanal (12) ausgeführt ist,
wobei der innere Strömungskanal (14) von dem äußeren Strömungskanal (12) ummantelt ist und
in dem äußeren Strömungskanal (12) eine Hauptströmung (11) geführt wird,
während in dem inneren Strömungskanal (14) eine Zusatzströmung (13) geführt wird,
**dadurch gekennzeichnet, dass**
die Düse (5) oder ein Ausströmring (20) in der Triebwerksaustrittsebene (16) onduliert ist.

2. Strahltriebwerk nach Anspruch 1, wobei der innere Strömungskanal (14) in Strömungsrichtung vor der Triebwerksaustrittsebene (16) endet, wobei der Abstand zwischen dem Ende des inneren Strömungskanals (14) und der Triebwerksaustrittsebene (16) zwischen 10% und 25% des Durchmessers des Triebwerks in der Triebwerksaustrittsebene (16) beträgt.

3. Strahltriebwerk nach Anspruch 1 oder 2, wobei der äußere Strömungskanal (12) von einem Bypasskanal umgeben ist.

4. Strahltriebwerk nach einem der vorhergehenden Ansprüche, wobei der Massenstrom der Zusatzströmung zwischen 5% und 20%, bevorzugt zwischen 5% und 10%, des Massenstroms der Triebwerkshauptströmung beträgt.

5. Strahltriebwerk nach einem der vorhergehenden Ansprüche, wobei der innere Strömungskanal (14) durch eine beidseitig offene Hohlwelle (10) gebildet ist.

6. Strahltriebwerk nach einem der vorhergehenden Ansprüche, wobei am Triebwerksaustritt eine Vorrichtung zum zumindest teilweisen Verschließen der Düsenaustrittsfläche vorgesehen ist.

7. Strahltriebwerk nach Anspruch 6, wobei die Vorrichtung zum zumindest teilweisen Verschließen der Düsenaustrittsfläche eine oder mehrere Klappen umfasst.

8. Verfahren zur Verminderung der Schallemission eines Turbostrahltriebwerks,
bei dem einer Triebwerkshauptströmung im Bereich einer Triebwerksaustrittsebene näherungsweise mittig eine Zusatzströmung zugeführt wird,
wobei die Zusatzströmung in einem inneren Strömungskanal und die Triebwerkshauptströmung in einem äußeren Strömungskanal durch das Triebwerk geführt wird und der innere Strömungskanal von dem äußeren Strömungskanal ummantelt ist, und
wobei die Zuführung der Zusatzströmung zur Triebwerkshauptströmung in einem Abstand zwischen 10% und 25% des Durchmessers des Triebwerks in einer Triebwerksaustrittsebene vor der Triebwerksaustrittsebene erfolgt.

9. Verfahren nach Anspruch 8, wobei ein Massenstrom der Zusatzströmung zwischen 5% und 20%, bevorzugt zwischen 5% und 10%, eines Massenstroms der Triebwerkshauptströmung beträgt.

10. Verfahren nach Anspruch 8 oder 9, wobei die zusammengeführte Haupt- und Zusatzströmung durch eine ondulierte Düse (5) oder einen ondulierten Ausströmring (20) geführt wird.
